# EUROPÄISCHE PATENTSCHRIFT

(11) **EP 3 081 745 B1**
(45) Veröffentlichungstag und Bekanntmachung des Hinweises auf die Patenterteilung: **01.04.2020**
(21) Anmeldenummer: 15163329.4
(22) Anmeldetag: 13.04.2015
(51) Int. Cl.: G01M 1/24, F01D 5/02, G01M 1/36

(54) **VERFAHREN ZUM VERBINDEN WENIGSTENS ZWEIER ROTORELEMENTE EINER STRÖMUNGSMASCHINE**
METHOD FOR CONNECTING AT LEAST TWO ROTOR ELEMENTS OF A FLOW ENGINE
PROCÉDÉ DE LIAISON D'AU MOINS DEUX ÉLÉMENTS DE ROTOR D'UNE TURBOMACHINE

(43) Veröffentlichungstag der Anmeldung: 19.10.2016
(73) Patentinhaber: MTU Aero Engines AG, 80995 München (DE)
(72) Erfinder: Winkler, Lutz, 31515 Wunstorf (DE)

(56) Entgegenhaltungen:
- FR-A1- 2 303 277
- GB-A- 2 319 812
- US-A- 4 864 859
- US-A1- 2005 065 712
- US-A1- 2008 075 592

## Beschreibung

Die Erfindung betrifft ein Verfahren zum Verbinden wenigstens zweier Rotorelemente wenigstens eines Rotors einer Strömungsmaschine gemäß dem Oberbegriff des Anspruchs 1. Die Erfindung betrifft weiterhin eine Montagevorrichtung.

Ein Rotor einer Strömungsmaschine wird aus einzelnen Rotorelementen wie Scheiben, Trommeln und/oder Schäften zusammengesetzt. Dabei ist ein Ziel, bei der Montage eine Unwucht des herzustellenden Rotors zu minimieren und somit seine Performance zu verbessern. Dies geschieht üblicherweise nach dem Trial-and-Error-Prinzip. Nach dem Verbinden von zwei Rotorelementen wird das Ergebnis überprüft und mit Herstellervorgaben abgeglichen. Bei einem ausreichend guten Ergebnis kann der nächste Montageschritt erfolgen. Bei einem schlechten Ergebnis müssen die zwei Rotorelemente wieder getrennt und in einer anderen relativen Montageausrichtung zueinander erneut miteinander verbunden werden. Anschließend muss wieder geprüft werden, ob die daraus resultierende Unwucht des Rotors den Anforderungen genügt. Diese Schritte müssen so lange wiederholt werden, bis der gesamte Rotor aufgebaut ist und die Anforderungen an dessen Unwucht erfüllt sind. Das macht einen Rotoraufbau unplanbar und das Ergebnis kann verbesserungsfähig sein.

Aus diesem Grund gibt es Anbieter von sogenannten Rotoroptimierungsverfahren. Bekannt sind dabei beispielsweise Verfahren von den Firmen Axiam und Precitech (siehe zum Beispiel die US2008/0075592). Dabei wird mit speziellen taktilen Sensorelementen einer Messeinrichtung ein Rundlauf wenigstens einer radial außen liegenden Mantelfläche der Rotorelemente an jeweils wenigstens zwei voneinander axial beabstandeten Stellen erfasst. In Abhängigkeit von diesen Messdaten wird dann bestimmt, wie die einzelnen Rotorelemente relativ zueinander bei einer Montage ausgerichtet sein sollten, um die Unwucht des herzustellenden Rotors zu minimieren.

Nachteilig bei diesen bekannten Rotoroptimierungsverfahren ist jedoch, dass sie für Strömungsmaschinen mit besonders hohen Ansprüchen an die Unwucht des Rotors nicht genau genug sind. Gerade bei besonders großen Strömungsmaschinen und entsprechend besonders großen Rotorelementen sind die bekannten Verfahren nicht präzise genug, um die Unwucht auf ein akzeptables Maß zu reduzieren.

Aus diesem Grund ist es Aufgabe der vorliegenden Erfindung ein gattungsgemäßes Verfahren bereitzustellen, bei dem eine Unwucht eines herzustellenden Rotors besonders gut minimiert werden kann.

Diese Aufgabe wird erfindungsgemäß durch ein Verfahren zum Verbinden wenigstens zweier Rotorelemente mit den Merkmalen des Anspruchs 1 gelöst. Zudem wird diese Aufgabe durch eine Montagevorrichtung gemäß den Merkmalen des Anspruchs 12 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtungen als vorteilhafte Ausgestaltungen des Verfahrens und umgekehrt anzusehen sind.

Ein erster Aspekt der Erfindung betrifft ein Verfahren zum Verbinden wenigstens zweier Rotorelemente wenigstens eines Rotors einer Strömungsmaschine umfassend zumindest folgende Schritte:
- Erfassen eines Rundlaufs wenigstens einer radial außen liegenden Mantelfläche der Rotorelemente an jeweils wenigstens zwei voneinander axial beabstandeten Stellen mittels einer Messeinrichtung;
- Bestimmen eines Abstandes und einer Winkellage eines Massenschwerpunktes zu einer Drehachse des jeweiligen Rotorelements in Abhängigkeit von dem jeweiligen erfassten Rundlauf;
- Bestimmen eines jeweiligen Abstandes eines Gesamtmassenschwerpunkts des aus den Rotorelementen aufgebauten Rotors zu seiner Gesamtdrehachse bei verschiedenen relativen Montageausrichtungen der Rotorelemente zueinander in Abhängigkeit von den vorher bestimmten Massenschwerpunkten der jeweiligen Rotorelemente mittels einer Auswerteinrichtung;
- Bestimmen derjenigen dieser verschiedenen relativen Montageausrichtungen der Rotorelemente zueinander, bei welcher der Abstand des Gesamtmassenschwerpunktes des Rotors zu seiner Gesamtdrehachse minimiert wird;
- Verbinden der Rotorelemente miteinander bei derjenigen Montageausrichtung, bei welcher der vorher bestimmte Abstand des Gesamtmassenschwerpunktes des herzustellenden Rotors zu seiner Gesamtdrehachse minimiert ist.

Das erfindungsgemäße Verfahren zeichnet sich dabei dadurch aus, dass das Erfassen des Rundlaufs der radial außenliegenden Mantelflächen der Rotorelemente optisch mittels mindestens eines optischen Sensorelements der Messeinrichtung erfolgt und dass die durch die Messeinrichtung erfassten Daten mittels der Auswerteinrichtung mit einem dreidimensionalen Modell, insbesondere einem CAD-Modell, der jeweiligen Rotorelemente verknüpft werden und durch die Messeinrichtung die Daten von einer Vielzahl von funktional gleichartigen Rotorelementen erfasst werden und mittels der Auswerteinrichtung dasjenige Rotorelement dieser Vielzahl von funktional gleichartigen Rotorelementen zum Verbinden mit wenigstens einem weiteren Rotorelement ausgewählt wird, bei dessen Auswahl der Abstand des Gesamtmassenschwerpunktes des herzustellenden Rotors von seiner Gesamtdrehachse minimiert ist. Ein optisches Sensorelement kann den jeweiligen Rundlauf der jeweiligen Rotorelemente wesentlich genauer erfassen als ein taktiles Sensorelement. Außerdem kann ein optisches Sensorelement wenigstens zwei axial voneinander beabstandete Stellen vermessen, ohne dass das Sensorelement hierfür zwangsläufig bewegt und/oder verstellt werden muss. Dadurch können Ungenauigkeiten bei einer Messung durch solch eine Verstellung und/oder Bewegung des Sensorelements verhindert werden. Gerade bei besonders großen Rotoren und/oder Rotorelementen ist dies von Vorteil. Bei einem besonders großen Rotorelement kann durch das optische Sensorelement beispielsweise der Rundlauf des obersten Endes und des untersten Endes der radial außen liegenden Mantelfläche des Rotorelements problemlos erfasst werden, ohne dass das optische Sensorelement verstellt werden muss. Dabei ist es vorteilhafterweise möglich, dass der Rundlauf der wenigstens zwei axial voneinander beabstandeten Stellen durch das optische Sensorelement gleichzeitig erfasst wird.

Das optische Sensorelement kann beispielsweise eine 3D-Kamera sein. Um den Rundlauf der radial außen liegenden Mantelfläche eines Rotorelements zu erfassen, kann das Rotorelement beispielsweise drehbar auf einem Messtisch gelagert sein. Alternativ kann das optische Sensorelement zum Erfassen des Rundlaufs um das Rotorelement bewegt, insbesondere rotiert werden. Eine weitere Möglichkeit ist, wenigstens so viele optische Sensorelemente vorzusehen, dass der Rundlauf der Mantelfläche an einer umlaufenden Messstelle komplett erfasst werden kann. Das heißt, die Mantelfläche kann durch eine Mehrzahl von optischen Sensorelement umlaufend komplett an wenigstens einer axialen Stelle gleichzeitig erfasst. Dadurch können Ungenauigkeiten bei der Erfassung des Rundlaufs, welche durch ein Bewegen des Rotorelements und/oder des optischen Sensorelements entstehen können, vermieden werden.

Durch die Möglichkeit mittels des optischen Sensorelements den Rundlauf der Rotorelemente besonders genau erfassen zu können, kann auch der Abstand und die Winkellage des Massenschwerpunkts der Rotorelemente besonders genau bestimmt werden. Damit können auch besonders genau und zuverlässig die relativen Montageausrichtungen der Rotorelemente zueinander, bei welcher der Abstand des Gesamtmassenschwerpunkts des Rotors zu seiner Gesamtdrehachse besonders klein ist, bestimmt werden. Entsprechend kann die Unwucht des herzustellenden Rotors besonders zuverlässig reduziert werden.

Eine Lage des jeweiligen Massenschwerpunkts der jeweiligen Rotorelemente kann beispielsweise dadurch bestimmt werden, indem anhand des erfassten Rundlaufs die Hauptträgheitsachsen des Rotorelements bestimmt werden. Die Bestimmung des jeweiligen Abstandes des Gesamtmassenschwerpunkts des aus den Rotorelementen aufgebauten Rotors zu seiner Gesamtdrehachse kann ebenso erfolgen. Diese Bestimmungen können mittels der Auswerteinrichtung gemacht werden, welche beispielsweise wenigstens einen Computer umfasst.

Die relativen Montageausrichtungen der Rotorelemente zueinander entsprechen insbesondere der relative Ausrichtung der Winkellagen der Massenschwerpunkte der Rotorelemente in einer definierten Ausrichtung zueinander. Zum Verändern einer Montageausrichtung der Rotorelemente zueinander werden die Rotorelemente relativ zueinander um eine gemeinsame Drehachse verdreht. Die gemeinsame Drehachse der Rotorelemente wird beispielsweise durch eine Achse einer gemeinsame Welle definiert.

Vor dem Erfassen des Rundlaufs der Rotorelemente kann deren jeweilige Lage relativ zu der Messeinrichtung markiert werden. Die Montageausrichtung, bei welcher die Rotorelemente miteinander verbunden werden sollen, kann dann beispielsweise als relativer Drehwinkel dieser Markierung eines Rotorelements zu einer Markierung eines anderen Rotorelements angegeben werden. Somit ist dann einfach eine Ausrichtung der Rotorelemente so zueinander möglich, dass diese der optimierten Montageausrichtung entspricht.

In weiterer vorteilhafter Ausgestaltung des erfindungsgemäßen Verfahrens ist es vorgesehen, dass mittels des optischen Sensorelements eine Exzentrizität einer gesamten jeweiligen Mantelfläche der Rotorelemente erfasst wird, wobei mittels der Auswerteinrichtung in Abhängigkeit von dieser erfassten Exzentrizität der gesamten jeweiligen Mantelfläche der Abstand und die Winkellage des Massenschwerpunkts von der Drehachse des jeweiligen Rotorelements bestimmt werden. Durch die Verwendung eines optischen Sensorelements ist es möglich, den Rundlauf der radial außenliegenden Mantelflächen der jeweiligen Rotorelemente an nahezu beliebig vielen voneinander axial beabstandeten Stellen zu erfassen. Der Abstand und die Anzahl dieser Stellen werden lediglich durch die Auflösung des optischen Sensorelements begrenzt. Es kann also der gesamte Exzentrizitätsverlauf der Mantelfläche der Rotorelemente erfasst werden. Im Gegensatz zu taktilen Messeinrichtungen sind also wesentlich weniger Interpolationen zwischen Messstellen notwendig, wenn die Exzentrizität der gesamten Mantelfläche berücksichtigt werden soll. Damit können der Abstand und die Winkellage des Massenschwerpunkts von der Drehachse der jeweiligen Rotorelemente besonders genau bestimmt werden.

Theoretisch ist zwar auch ein Erfassen der Exzentrizität der gesamten Mantelfläche mittels eines taktilen Sensorelements möglich. Eine solche Erfassung mittels eines taktilen Sensorelements ist jedoch bedeutend aufwendiger und ungenauer als mittels eines optischen Sensorelements. Insbesondere kann es durch ein wiederholtes und/oder besonders kleines Bewegen eines taktilen Sensorelements auch zu weiteren Ungenauigkeiten bei der Vermessung des Rundlaufs kommen. Das optische Sensorelement kann dagegen die gesamte Mantelfläche an nahezu beliebig vielen voneinander axial beabstandeten Stellen gleichzeitig erfassen, während ein taktiles Sensorelement zu jeder Stelle, deren Rundlauf vermessen werden soll, bewegt werden muss. Das heißt, eine entsprechende Messung kann bei Nutzung des optischen Sensorelements auch wesentlich schneller durchgeführt werden.

In weiterer vorteilhafter Ausgestaltung des erfindungsgemäßen Verfahrens ist es vorgesehen, dass mittels der Messeinrichtung ein Rundlauf wenigstens zweier voneinander axial beabstandeter Lagerstellen der jeweiligen Rotorelemente erfasst wird, wobei mittels der Auswerteinrichtung in Abhängigkeit von diesen erfassten Rundläufen der voneinander axial beabstandeten Lagerstellen die Drehachse der jeweiligen Rotorelemente bestimmt wird. Mit anderen Worten wird nicht nur der Rundlauf der jeweiligen Rotorelemente erfasst, sondern auch die relative Lage der Drehachse der jeweiligen Rotorelemente zu deren Rundlauf und/oder zu deren Mantelfäche. Auch die Lagerstellen der Rotorelemente können bei der Herstellung gewissen Fertigungstoleranzen unterliegen. Diese Abweichungen können so nun ebenfalls bei der Minimierung der Unwucht des herzustellenden Rotors berücksichtigt werden.

Die Lagerstellen können dabei sowohl mit einem optischen als auch mit einem haptischen Sensorelement erfasst werden. Bei der Benutzung eines optischen Sensorelements kommen erneut dessen Vorteile bezüglich Genauigkeit und Geschwindigkeit des Verfahrens zum Tragen. Außerdem kann das gleiche Sensorelement wie für das Erfassen des Rundlaufs der Rotorelemente genutzt werden. Dabei kann es jedoch gegebenenfalls notwendig sein, dass das optische Sensorelement bewegt, insbesondere verdreht werden muss. Bei der Verwendung eines zusätzlichen optischen oder haptischen Sensorelements ist dies nicht notwendig. Zudem können dann die jeweiligen Lagerstellen gleichzeitig mit dem Rundlauf des Rotorelements vermessen werden. Insbesondere ist dann gegebenenfalls keine Kalibration der Messeinrichtung notwendig, da sich ein Referenzpunkt durch das Vermessen der Drehachse ergibt.

In weiterer vorteilhafter Ausgestaltung des erfindungsgemäßen Verfahrens ist es vorgesehen, dass mittels mindestens eines optischen Sensorelements eine Exzentrizität einer gesamten Lagermantelfläche der jeweiligen Rotorelementen erfasst wird, wobei mittels der Auswerteinrichtung in Abhängigkeit von dieser erfassten Exzentrizität der gesamten Lagermantelfläche die Drehachse der jeweiligen Rotorelemente bestimmt wird. Die Vorteile sind hierbei ähnlich wie bei der Erfassung der Exzentrizität der gesamten radial außenliegenden Mantelfläche der Rotorelemente. Die Drehachse kann so besonders genau bestimmt werden und/oder Ungenauigkeiten durch Interpolationen sind besonders reduziert.

Alternativ oder zusätzlich ist es auch möglich, die Planheit wenigstens einer Stirnfläche wenigstens einer der Rotorelemente an zwei radial voneinander beabstandeten Stellen der Stirnfläche mittels der Messeinrichtung zu erfassen. Auch Abweichungen in der Planheit der Stirnflächen der Rotorelemente können einen Einfluss auf die Lage des Massenschwerpunkts eines Rotorelements haben. Entsprechend kann bei einer Berücksichtigung der Planheit der Stirnfläche der Rotorelemente die Unwucht des herzustellenden Rotors besonders zuverlässig reduziert werden. Auch dabei kann vorteilhafterweise mittels eines optischen Sensorelements die Planheit der gesamten Stirnfläche erfasst und in Abhängigkeit davon die Winkellage und der Abstand des Massenschwerpunkts der jeweiligen Rotorelemente bestimmt werden.

In weiterer vorteilhafter Ausgestaltung des erfindungsgemäßen Verfahrens ist es vorgesehen, dass für die jeweiligen Rotorelemente Korrekturfaktoren vorgegeben werden, wobei in Abhängigkeit von diesen Korrekturfaktoren der jeweiligen Abstand des Gesamtmassenschwerpunkts des aus den Rotorelementen aufgebauten Rotors zu seiner Gesamtdrehachse bei verschiedenen relativen Montageausrichtungen der Rotorelemente zueinander mittels der Auswerteinrichtung bestimmt wird. Bei den Korrekturfaktoren handelt es sich um manuelle Vorgaben, um weitere Randbedingungen bei dem Verbinden der wenigstens zwei Rotorelemente miteinander beachten zu können. Zum Beispiel können so weitere Anbauteile an dem Rotorelement berücksichtigt werden, welche nicht mit vermessen werden. Beispielsweise ist es mittels eines Korrekturfaktors auch möglich, den Rotoraufbau so zu optimieren, dass eines der Lager des Rotors besonders wenig durch eine Unwucht belastet wird. Durch den Korrekturfaktor kann eine Montageausrichtung der Rotorelemente zueinander als optimal bestimmt werden, bei welcher der Abstand des Massenschwerpunkts des herzustellenden Rotors nicht den kleinsten möglichen Wert erreicht.

In weiterer vorteilhafter Ausgestaltung des erfindungsgemäßen Verfahrens ist es vorgesehen, dass für die jeweiligen Rotorelemente einer der jeweiligen Korrekturfaktoren so vorgegeben wird, dass dieser Korrekturfaktor jeweils einer Masse des jeweiligen Rotorelements entspricht. Damit kann besonders einfach berücksichtigt werden, dass unterschiedliche Rotorelemente unterschiedliche Massen aufweisen. Ein Massenschwerpunkt eines schwereren Rotorelements hat einen größeren Einfluss auf die Lage des Gesamtmassenschwerpunkts des herzustellenden Rotors und damit auf die Unwucht des Rotors als ein leichteres Rotorelement. Dieser Einfluss kann besonders einfach mittels der Korrekturfaktoren berücksichtigt werden.

In dem erfindungsgemäßen Verfahren ist es vorgesehen, dass die durch die Messeinrichtung erfassten Daten mittels der Auswerteinrichtung mit einem dreidimensionalen Modell, insbesondere einem CAD-Modell, der jeweiligen Rotorelemente verknüpft wird. Dabei kann das dreidimensionale Modell auch aus den erfassten Daten selbst erzeugt werden. Damit ist eine grafische Ausgabe der Messergebnisse möglich. Insbesondere kann die tatsächliche Form, das heißt die jeweiligen erfassten Flächen des Rotorelements, mit dessen optimaler Form verglichen werden. Außerdem können in dem dreidimensionalen Modell Ausnehmungen, Vertiefungen und/oder Hohlräume berücksichtigt werden, welche nicht durch die Messeinrichtung erfasst werden können. Mittels des dreidimensionalen Modells der Rotorelemente können diese auch virtuell in einem CAD-Programm miteinander verbunden werden, um so mit beispielsweise bereits bei dem Entwurf des Rotors genutzten Konstruktionstools eine optimale relative Montageausrichtung der Rotorelemente zueinander bestimmen zu können. Mittels der Verknüpfung mit einem dreidimensionalen Modell kann zudem auch die tatsächliche Gesamtmasse der Rotorelemente, insbesondere unter Berücksichtigung der tatsächlichen Form der Rotorelemente, besonders einfach bestimmt werden.

In weiterer vorteilhafter Ausgestaltung des erfindungsgemäßen Verfahrens ist es vorgesehen, dass das dreidimensionale Modell der jeweiligen Rotorelemente Informationen zu deren jeweiliger Dichte beinhaltet, insbesondere eine Dichteverteilung, wobei in Abhängigkeit von diesen Informationen die relativen Montageausrichtungen der jeweiligen Rotorelemente zueinander, bei welchen der Abstand des Gesamtmassenschwerpunkts des herzustellenden Rotors zu seiner Gesamtdrehachse minimiert ist, bestimmt wird. Damit kann berücksichtigt werden, dass ein Rotorelement aus mehreren verschiedenen Werkstoffen bestehen kann. Bei unterschiedlichen örtlichen Dichten haben jeweilige dort vorhandene Rundlauffehler unterschiedliche Auswirkungen auf den Gesamtmassenschwerpunkt des herzustellenden Rotors. Mit Informationen über die Dichte kann dies leicht berücksichtigt werden und so die Unwucht des herzustellenden Rotors besonders reduziert werden. In Abhängigkeit von diesen Informationen können der Abstand und die Winkellage des Massenschwerpunkts der jeweiligen Rotorelemente von ihrer Drehachse bestimmt werden. Das Bestimmen der Gesamtmasse jeweiliger Rotorelemente und des herzustellenden Rotors ist so ebenfalls besonders einfach möglich.

In weiterer vorteilhafter Ausgestaltung des erfindungsgemäßen Verfahrens ist es vorgesehen, dass in Abhängigkeit von durch die Messeinrichtung erfassten Daten wenigstens eines der jeweiligen Rotorelemente nachbearbeitet wird. Erst dadurch, dass gegebenenfalls vorhandene Abweichungen des Rotorelements von einem idealen Rundlauf erfasst wurden, ist eine sinnvolle Nachbearbeitung möglich. Eine Nachbearbeitung der Rotorelemente kann insbesondere mittels Abschleifen oder durch eine spanende Bearbeitung erfolgen. Damit kann ein Abstand eines Massenschwerpunkts des nachzubearbeitenden Rotorelements von seiner Drehachse und/oder dessen Winkellage reduziert und/oder verändert werden. Entsprechend kann so auch die Unwucht des herzustellenden Rotors durch die Nachbearbeitung beeinflusst werden. Besonders einfach ist eine Nachbearbeitung, wenn die mittels der Messeinrichtung erfassten Daten mit dem dreidimensionalen Modell verknüpft wurden. Eine Nachbearbeitung einzelner Rotorelemente ist besonders sinnvoll, wenn sonst ohne eine Nachbearbeitung ein Abstand des Gesamtmassenschwerpunkts des herzustellenden Rotors bei der bestimmten optimalen relativen Montageausrichtung der Rotorelemente zueinander eine Toleranzvorgabe immer noch überschreiten würde.

Im erfindungsgemäßen Verfahren ist es vorgesehen, dass durch die Messeinrichtung die Daten von einer Vielzahl von funktional gleichartigen Rotorelementen erfasst werden und mittels der Auswerteinrichtung dasjenige Rotorelement dieser Vielzahl von funktional gleichartigen Rotorelementen zum Verbinden mit wenigstens einem weiteren Rotorelement ausgewählt wird, bei dessen Auswahl der Abstand des Gesamtmassenschwerpunkts des herzustellenden Rotors von seiner Gesamtdrehachse minimiert ist. Durch eine geschickte Kombination der Rotorelemente können für den Aufbau eines Rotors dann auch gegebenenfalls Rotorelemente verwendet werden, welche andernfalls als Ausschuss zu werten sind. Bei den Daten handelt es sich um die durch die Messeinrichtung erfassten Messgrößen, wobei das dreidimensionale Modell ebenfalls mitberücksichtigt werden kann. Diese Daten und/oder das dreidimensionale Modell können beispielsweise in einer Datenbank hinterlegt werden. Dabei kann es insbesondere sinnvoll sein, die Rotorelemente nicht erst unmittelbar vor dem geplanten Verbinden miteinander zu vermessen, sondern bereits jeweils unmittelbar nach deren jeweiliger Herstellung.

In weiterer vorteilhafter Ausgestaltung des erfindungsgemäßen Verfahrens ist es vorgesehen, dass die verschiedenen relativen Montageausrichtungen der Rotorelemente zueinander, bei welchen die jeweiligen Abstände des Gesamtmassenschwerpunkts des aus den Rotorelementen aufgebauten Rotors zu seiner Gesamtdrehachse bestimmt werden, bei diskreten Verdrehwinkeln der Rotorelemente zueinander ausgewählt werden. Üblicherweise ist das Ausrichten der Rotorelemente zueinander für eine Montage beziehungsweise für deren Verbindung miteinander nur in diskreten Schritten möglich. Beispielsweise müssen jeweilige Bohrlöcher der Rotorelemente, an welchen diese miteinander verschraubt werden, zueinander koaxial ausgerichtet werden. Bei beispielsweise 24 solcher Bohrlöcher kann die relative Montageausrichtung der jeweiligen Rotorelemente zueinander nur in 15°-Schritten verändert werden. Entsprechend ist es sinnvoll, wenn der Gesamtmassenschwerpunkt des herzustellenden Rotors auch nur bei solchen montierbaren Ausrichtungen bestimmt wird. Durch diese Berücksichtigung der Montierbarkeit der Rotorelemente miteinander kann also der Aufwand zur Durchführung des Verfahrens besonders gering sein.

In weiterer vorteilhafter Ausgestaltung des erfindungsgemäßen Verfahrens ist es vorgesehen, dass der Abstand der Massenschwerpunkte der jeweiligen Rotorelemente zu deren jeweiliger Drehachse und/oder der Abstand des Gesamtmassenschwerpunkts des Rotors zu einer Gesamtdrehachse des herzustellenden Rotors mittels der Auswerteinrichtung mit einem vorgebbaren Schwellenwert verglichen werden, welcher einer jeweiligen Toleranzvorgabe für das jeweilige Rotorelement und/oder für den herzustellenden Rotor entsprechen. Überschreitet der Abstand des Massenschwerpunkts eines der Rotorelemente eine Toleranzvorgabe, kann dieses Rotorelement beispielsweise für eine Nachbearbeitung vorgesehen werden. Außerdem kann die Toleranzvorgabe jeweils beim Bestimmen des Abstands des Gesamtmassenschwerpunkts des herzustellenden Rotors von seiner Drehachse bei den verschiedenen relativen Montageausrichtungen der Rotorelemente zueinander beachtet werden. Ergibt diese Bestimmung erstmals bei einer der verschiedenen relativen Montageausrichtungen der Rotorelemente zueinander, dass eine Toleranzvorgabe erfüllt wird, kann auf weitere Bestimmungen verzichtet werden. Stattdessen können die Rotorelemente unmittelbar bei dieser relativen Montageausrichtung zueinander miteinander verbunden werden. Es können also solange verschiedene relative Montageausrichtung der Rotorelemente zueinander geprüft werden, bis der aus einer Verbindung der Rotorelemente bei ihrer jeweiligen aktuellen Montagausrichtung resultierende Rotor eine Toleranzvorgabe erfüllt. Dann kann auf weitere Prüfungen verzichtet werden. Die Toleranzvorgabe kann so als eine Art Abbruchkriterium für einen Schritt des Verfahrens genutzt werden. Dadurch ist das Verfahren besonders aufwandsarm und kann besonders schnell durchgeführt werden.

In weiterer vorteilhafter Ausgestaltung des erfindungsgemäßen Verfahrens ist es vorgesehen, dass das Verfahren ein Verfahren zum Verbinden wenigstens zweier Rotorelemente wenigstens eines Rotors einer als Flugtriebwerk ausgebildeten Strömungsmaschine ist. Gerade bei Flugtriebwerken werden besonders hohe Anforderungen an die Unwucht gestellt, sodass die Anwendung des Verfahrens besonders sinnvoll ist. Eine zu hohe Unwucht in einem Flugtriebwerk kann sonst anderenfalls zu Vibrationen führen, welche eine Struktur eines Flugzeugs unnötig belasten.

Ein zweiter Aspekt der Erfindung betrifft eine Montagevorrichtung mit einer Messvorrichtung, wie im Anspruch 12 beschrieben.

So kann unmittelbar sichergestellt werden, dass die Rotorelemente auch genau bei der bestimmten, optimalen relativen Montageausrichtung zueinander miteinander verbunden werden. Der Einsatz einer solchen Montagevorrichtung ist insbesondere bei einer Massen- und/oder Fließbandproduktion von Strömungsmaschinen von Vorteil. Die sich aus der Verwendung des Verfahrens gemäß dem ersten Erfindungsaspekt und/oder aus der Verwendung der Messvorrichtung gemäß dem zweiten Erfindungsaspekt ergebenden Merkmale und Vorteile sind den Beschreibungen des ersten und/oder zweiten Erfindungsaspekts zu entnehmen, wobei vorteilhafte Ausgestaltungen des ersten und/oder zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt:
- Fig. 1: einen schematischen Ablauf des erfindungsgemäßen Verfahrens; und
- Fig. 2: in einer schematischen Perspektivansicht und einer schematischen Draufsicht, wie eine Mehrzahl von Rotorelementen miteinander zu verbinden ist.

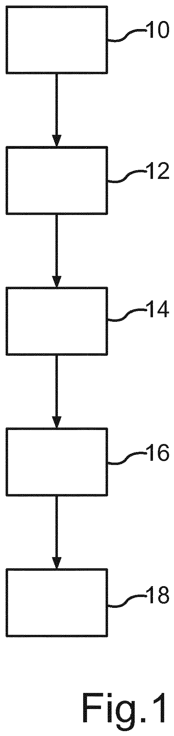

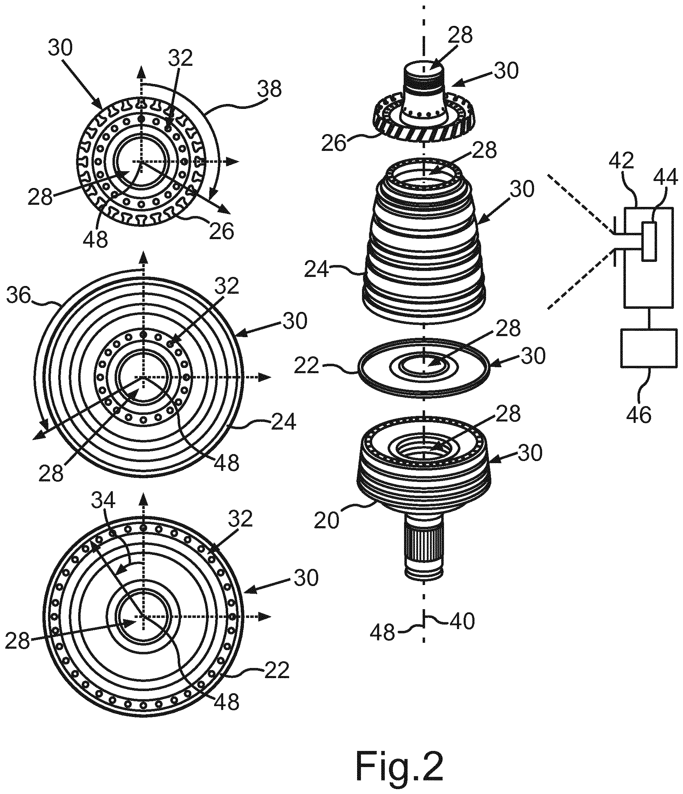

Fig. 1 zeigt in einem schematischen Ablaufdiagramm, wie das Verfahren zum Verbinden wenigstens zweier Rotorelemente wenigstens eines Rotors einer Strömungsmaschine durchgeführt werden kann. Die beispielhaft zu verbindenden Rotorelemente 20, 22, 24, 26 sind in Fig. 2 in einer schematischen Perspektivansicht und einer schematischen Draufsicht dargestellt. Gemäß einem ersten Verfahrensschritt 10 wird ein Rundlauf wenigstens einer radial außen liegenden Mantelfäche 30 der Rotorelemente 20, 22, 24, 26 an jeweils wenigstens zwei voneinander axial beabstandeten Stellen mittels einer Messeinrichtung 42 erfasst (siehe auch Figur 2). Anschließend wird in einem Verfahrensschritt 12 ein Abstand und ein Winkellage eines Massenschwerpunktes zu einer Drehachse 48 des jeweiligen Rotorelements 20, 22, 24, 26 in Abhängigkeit von dem jeweiligen erfassten Rundlauf bestimmt. In einem weiteren Verfahrensschritt 14 wird ein jeweiliger Abstand eines Gesamtmassenschwerpunkts des aus den Rotorelementen 20, 22, 24, 26 aufgebauten Rotors zu seiner Gesamtdrehachse 40 bei verschiedenen relativen Montageausrichtungen der Rotorelemente 20, 22, 24, 26 zueinander in Abhängigkeit von den vorher bestimmten Massenschwerpunkten der jeweiligen Rotorelemente 20, 22, 24, 26 mittels einer Auswerteinrichtung 46 bestimmt bzw. ermittelt. Es folgt in einem weiteren Verfahrensschritt 16 ein Bestimmen derjenigen dieser verschiedenen relativen Montageausrichtungen der Rotorelemente 20, 22, 24, 26 zueinander, bei welcher der Abstand des Gesamtmassenschwerpunktes des Rotors zu seiner Gesamtdrehachse 40 minimiert wird. Schließlich werden die Rotorelemente 20, 22, 24, 26 in einem folgenden Verfahrensschritt 18 miteinander bei derjenigen Montageausrichtung verbunden, bei welcher der vorher bestimmte Abstand des Gesamtmassenschwerpunktes des herzustellenden Rotors zu seiner Gesamtdrehachse 40 minimiert ist.

Das Erfassen des Rundlaufs der radial außen liegenden Mantelfläche 30 der Rotorelemente 20, 22, 24, 26 erfolgt dabei optisch mittels mindestens eines optischen Sensorelements 44 der Messeinrichtung 42. Dadurch kann der Rundlauf der radial außen liegenden Mantelflächen 30 der Rotorelemente 20, 22, 24, 26 besonders genau erfasst werden und damit die Unwucht des herzustellenden Rotors besonders zuverlässig minimiert werden.

Die Auswerteinrichtung 46 ist beispielsweise als Computer ausgebildet. Die Messeinrichtung 42 überträgt die erfassten Daten der Rotorelemente 20, 22, 24, 26 an die Auswerteinrichtung 46, auf welcher diese gespeichert werden können. Insbesondere können dabei jeweilige Messergebnisse in einer Datenbank der Auswerteinrichtung 46 abgelegt werden.

Das im Vorhergehenden beschriebene Verfahren soll im Folgenden nochmals anhand des konkreten Beispiels von Fig. 2 beschrieben werden. In Fig. 2 ist in einer schematischen Perspektivansicht und einer schematischen Draufsicht eine Vielzahl von Rotorelementen 20, 22, 24, 26 gezeigt. Ziel des Verfahrens nach Fig. 1 ist es, nach einem Scan der Rotorelemente 20, 22, 24, 26 diese virtuell so gegeneinander zu verdrehen, dass eine optimale relative Position dieser Rotorelemente 20, 22, 24, 26 zueinander gefunden werden kann. Bei dieser Position der Rotorelemente 20, 22, 24, 26 werden diese dann miteinander verbunden. Eine solche Verbindung kann beispielsweise erfolgen, indem die Rotorelemente 20, 22, 24, 26 auf eine gemeinsame Welle geschoben werden und dort miteinander verschraubt werden. Die optimale Position ist dabei die relative Montageausrichtung der Rotorelemente 20, 22, 24, 26 zueinander, bei welcher eine Unwucht des herzustellenden Rotors minimiert ist. Es ist zudem die Position, bei welcher die Lagerstellen 28 der Rotorelemente 20, 22, 24, 26 und die Massenschwerpunkte von zusätzlich eingescannten Naben am besten fluchten und so die geringste Exzentrizität aufweisen.

Die Bauteile werden gescannt, indem das als 3D-Kamera ausgebildete optische Sensorelement 44 der Messeinrichtung 42 die radial außen liegenden Mantelflächen 30 der Rotorelemente 20, 22, 24, 26 erfasst. Damit kann ein Abstand des Massenschwerpunkts der jeweiligen Rotorelemente 20, 22, 24, 26 von deren jeweiliger Drehachse 48 - welcher hier dem jeweils eingezeichneten Koordinatensystem der Rotorelemente 20, 22, 24, 26 und auch der Gesamtdrehachse 40 des herzustellenden Rotors entspricht - berechnet werden. Diese Berechnung kann beispielsweise mittels eines Computers erfolgen. Die Drehachsen 48 und die Gesamtdrehachse 40 entspricht jeweils der axialen Richtung Rotorelemente 20, 22, 24, 26 und des herzustellenden Rotors.

Zusätzlich ist es möglich, mittels der 3D-Kamera radial innenliegende Mantelflächen der Rotorelemente 20, 22, 24, 26, welche die Lagerstellen 28 bilden, zu erfassen. Mittels dieser Lagerstellen 28 werden die Rotorelemente 20, 22, 24, 26 an einer gemeinsamen Welle gelagert. Mittels der Erfassung deren Rundlaufs und/oder deren Exzentrizität können dann zusätzlich auch die tatsächlichen Drehachsen 48 der Rotorelemente 20, 22, 24, 26 bestimmt werden. So kann der Einfluss der Rotorelemente 20, 22, 24, 26 auf die Unwucht des herzustellenden Rotors besonders genau bestimmt werden. Zudem kann so auf eine Kalibrierung der Messeinrichtung 42 auf die jeweiligen Drehachsen 48 der Rotorelemente 20, 22, 24, 26 verzichtet werden.

Bei der Bestimmung der optimalen Montageausrichtung der Rotorelemente 20, 22, 24, 26 zueinander kann eine mögliche Positionszahl ausgewählt werden. In dem in Fig. 2 gezeigten Beispiel ist diese Positionszahl beispielsweise 24. Sie entspricht der Anzahl an Bohrlöchern 32, mittels welcher die Rotorelemente 20, 22, 24, 26 miteinander verschraubt werden. Um die Rotorelemente 20, 22, 24, 26 miteinander verbinden zu können, müssen deren Bohrlöcher 32 koaxial zueinander ausgerichtet werden. Mittels der Positionszahl wird dabei eingestellt, in welcher Schrittweite die Rotorelemente 20, 22, 24, 26 zueinander zur Bestimmung der optimalen relativen Montageausrichtung verdreht werden. In diesem Beispiel können die Rotorelemente 20, 22, 24, 26 also nur in diskreten Winkellagen von jeweils 15° relativ zueinander miteinander verbunden werden. Bei jedem dieser Schritte wird bestimmt, wie sich der Massenschwerpunkt des herzustellenden Rotors durch die Verdrehung der Rotorelemente 20, 22, 24, 26 zueinander verändert.

Zusätzlich werden Korrekturfaktoren festgelegt, mittels welcher bestimmt wird, welche Punkte für eine Beurteilung und Auswahl einer Aufbauprognose des herzustellenden Rotors gewichtet werden. In dem gezeigten Beispiel werden nur die Lagerstellen 28 und die Mantelflächen 30 berücksichtigt. Dabei können jeweilige Korrekturfaktoren für die Rotorelemente 20, 22, 24, 26 so gewählt werden, dass diese der jeweiligen Masse der Rotorelemente 20, 22, 24, 26 entsprechen. Beispielsweise ist das Rotorelement 26 aus einer Titanlegierung gebildet und weist üblicherweise eine wesentlich geringere Dichte und geringere Masse auf als das aus einer Stahllegierung gebildete Rotorelement 20.

Mittels der Korrekturfaktoren kann zudem also berücksichtigt werden, dass die Rotorelemente 20, 22, 24, 26 bei gleichen Abständen ihrer jeweiligen Massenschwerpunkte einen unterschiedlich hohen Einfluss auf den Gesamtmassenschwerpunkt des herzustellenden Rotors haben können. Weiter können beispielsweise Teile, die nicht berücksichtigt und/oder nicht vermessen werden sollen, durch eine Gewichtung von 0 bei der Bestimmung der optimalen relativen Montageausrichtung der Rotorelemente 20, 22, 24, 26 zueinander unberücksichtigt bleiben. Beispielsweise können jeweilige Flansche des Rotors nicht berücksichtigt werden.

Zudem kann eine Glättung der mittels der Messeinrichtung 42 eingescannten und/oder digital erfassten Daten der Rotorelemente 20, 22, 24, 26 vorgesehen werden, beispielsweise mit einer einfachen und/oder quadratischen Mittelwertberechnung. Dadurch können Ungenauigkeiten der erfassten Daten ausgeglichen werden und/oder Interpolationen zwischen verschiedenen Stellen, an welchen der Rundlauf der Rotorelemente 20, 22, 24, 26 erfasst wurde, erzeugt werden.

Zusätzlich ist es möglich, mittels der erfassten Daten ein dreidimensionales Modell der Rotorelemente 20, 22, 24, 26 und des herzustellenden Rotors auszugeben. Dafür kann ein Visualisierungsfaktor vorgesehen werden, um bei geringen Dimensionen der Abweichung des Rundlaufs der Rotorelemente 20, 22, 24, 26 von einem idealisierten Rundlauf im Bereich von Hundertstel Millimeterbereichen diese auch auf einer Grafik erkennbar darstellen zu können. Beispielsweise werden diese Abweichungen für eine grafische Darstellung mit einem Visualisierungsfaktor von 2000 hoch skaliert werden. Die grafische Darstellung kann beispielsweise auf einem Bildschirm der Auswerteinrichtung 46 ausgegebenen werden.

Nachdem die optimale relative Montageausrichtung der Rotorelemente 20, 22, 24, 26 zueinander bestimmt wurde, kann man damit jeweilige Aufbaupositionen, das heißt Winkellagen der Rotorelemente 20, 22, 24, 26 zueinander festlegen, bei dem die festgelegten Narbenschwerpunkte die minimalste Exzentrizität haben.

Beispielsweise wird das Rotorelement 20 als Referenzrotorelement genutzt, dessen Montageausrichtung nicht verändert wird. Das Rotorelement 22 muss dagegen um einen Winkel von 30° nach links gegen den Uhrzeigersinn relativ zu seiner Ausgangslage zum Rotorelement 20 verdreht werden. Dieser Winkel ist in Fig. 2 durch einen Pfeil mit dem Bezugszeichen 34 dargestellt. Das Rotorelement 24 wird dagegen um 120° links gegen den Uhrzeigersinn verdreht, was durch einen Pfeil mit dem Bezugszeichen 36 markiert ist. Das Rotorelement 26 wird für die optimale relative Montageausrichtung um einen Winkel von 120° rechts im Uhrzeigersinn verdreht. Dieser Winkel ist durch einen Pfeil mit den Bezugszeichen 38 markiert. Die jeweiligen Massenschwerpunkte der Rotorelemente 20, 22, 24, 26 weichen dann in ihrer Winkellage und Abstand von der Gesamtdrehachse 40 so ab, dass sich diese Abweichungen in der Summe minimieren. Das heißt die einzelnen Unwuchten der jeweiligen Rotorelemente 20, 22, 24, 26 gleichen sich gegenseitig wenigstens teilweise aus. Damit ist bei dieser Ausrichtung der Rotorelemente 20, 22, 24, 26 auch der Abstand des Gesamtmassenschwerpunktes des herzustellenden Rotors minimiert.

Diese Verdrehung der Rotorelemente 20, 22, 24, 26 kann beispielsweise mittels einer Ausrichteinrichtung automatisch erfolgen. Alternativ oder zusätzlich kann eine entsprechende Anweisung als eindeutige Aufbauanleitung des herzustellenden Rotors optisch und/oder akustisch ausgegeben werden, beispielsweise mittels der Auswerteinrichtung 46. Gegebenenfalls müssen die Rotorelemente 20, 22, 24, 26 dann manuell zueinander ausgerichtet werden. Bei einer manuellen Ausrichtung sollte die ursprüngliche Ausgangslage der Rotorelemente 20, 22, 24, 26, bei welcher diese vermessen wurden, markiert werden.

In der optimierten relativen Montageausrichtung zueinander werden die Rotorelemente 20, 22, 24, 26 anschließend miteinander verschraubt. Der dadurch hergestellte Rotor der Strömungsmaschine weist aufgrund der besonders präzisen Erfassung der Rundläufe der Rotorelemente 20, 22, 24, 26 eine besonders geringe Unwucht auf.

Es ist zudem möglich, jedes der Rotorelemente 20, 22, 24, 26 getrennt mittels der Messeinrichtung 42 zu vermessen. Alternativ ist aber auch eine gemeinsame Vermessung der Rotorelemente 20, 22, 24, 26 möglich. Hierfür ist es besonders sinnvoll, die Rotorelemente 20, 22, 24, 26 bereits auf einer gemeinsamen Welle teilweise zu montieren. Das heißt, die Rotorelemente 20, 22, 24, 26 werden beispielsweise bereits auf die gemeinsame Welle in ihre jeweilige vorgesehene axiale Position geschoben. Dabei werden die Rotorelemente 20, 22, 24, 26 jedoch noch nicht in ihrer Winkellage fixiert und sind so noch zueinander verdrehbar. Nach dem Vermessen der Rotorelemente 20, 22, 24, 26 können die Rotorelemente 20, 22, 24, 26 dann zunächst in ihre gewünschte relative Ausrichtung zueinander verdreht werden, um erst anschließend miteinander beispielsweise mittels einer Verschraubung verbunden zu werden. Danach kann unmittelbar eine Prüfung des Rotoraufbaus durch ein erneutes Vermessen mittels der Messeinrichtung 42 erfolgen, ohne dass eine erneute Kalibrierung notwendig ist. Alternativ kann auch die Unwucht des hergestellten Rotors durch einen entsprechenden Prüfstand, welcher den Rotor beispielsweise rotiert und die dabei entstehenden Kräfte misst, überprüft werden.

Anstelle einer taktilen Messung der Rotorelemente 20, 22, 24, 26 werden insbesondere deren Flansche und einige Referenzpunkte mittels einer optischen 3D Messtechnik gescannt. Die zusammengehörenden Rotorelemente 20, 22, 24, 26 können beispielsweise in einem handelsüblichen CAD-Programm bearbeitet und damit virtuell in diesem Programm zusammengefügt werden. Das CAD-Programm kann dabei auf der Auswerteinrichtung 46 laufen. In dem CAD-Programm können die Rotorelemente 20, 22, 24, 26 abhängig von der wahren Topografie ihrer Fügestellen - insbesondere der Flansche und jeweiliger Passdurchmesser - so lange virtuell verdreht werden, bis für jeweilige Referenzpunkte die minimalsten Rundlauffehler, die für den herzustellenden Rotor in Abhängigkeit von der tatsächlichen Form der Rotorelemente 20, 22, 24, 26 möglich sind, erreicht sind. Das Ergebnis ist dann eine eindeutige Aufbauanleitung für einen Rotor mit einer minimierten Unwucht. Dadurch ist eine planbare Rotormontage mit vorhersagbarem Ergebnis möglich. Die Laufruhe der Strömungsmaschine kann erhöht werden. Bei Flugtriebwerken kann mittels des so hergestellten Rotors eine Leistung besonders erhöht und Vibrationen besonders verringert werden.

### Bezugszeichenliste:

- 10: Verfahrensschritt
- 12: Verfahrensschritt
- 14: Verfahrensschritt
- 16: Verfahrensschritt
- 18: Verfahrensschritt
- 20: Rotorelement
- 22: Rotorelement
- 24: Rotorelement
- 26: Rotorelement
- 28: Lagerstelle
- 30: Mantelfläche
- 32: Bohrlöcher
- 34: Pfeil
- 36: Pfeil
- 38: Pfeil
- 40: Gesamtdrehachse
- 42: Messeinrichtung
- 44: optisches Sensorelement
- 46: Auswerteinrichtung
- 48: Drehachse

## Patentansprüche

1. Verfahren zum Verbinden wenigstens zweier Rotorelemente (20, 22, 24, 26) wenigstens eines Rotors einer Strömungsmaschine umfassend zumindest folgende Schritte:
- Erfassen eines Rundlaufs wenigstens einer radial außen liegenden Mantelfäche (30) der Rotorelemente (20, 22, 24, 26) an jeweils wenigstens zwei voneinander axial beabstandeten Stellen mittels einer Messeinrichtung (42);
- Bestimmen eines Abstandes und einer Winkellage eines Massenschwerpunktes zu einer Drehachse (48) des jeweiligen Rotorelements (20, 22, 24, 26) in Abhängigkeit von dem jeweiligen erfassten Rundlauf;
- Bestimmen eines jeweiligen Abstandes eines Gesamtmassenschwerpunkts des aus den Rotorelementen (20, 22, 24, 26) aufgebauten Rotors zu seiner Gesamtdrehachse (40) bei verschiedenen relativen Montageausrichtungen der Rotorelemente (20, 22, 24, 26) zueinander in Abhängigkeit von den vorher bestimmten Massenschwerpunkten der jeweiligen Rotorelemente (20, 24, 26, 28) mittels einer Auswerteinrichtung (46);
- Bestimmen derjenigen dieser verschiedenen relativen Montageausrichtungen der Rotorelemente (20, 24, 26, 28) zueinander, bei welcher der Abstand des Gesamtmassenschwerpunktes des Rotors zu seiner Gesamtdrehachse (40) minimiert wird;
- Verbinden der Rotorelemente (20, 22, 24, 26) miteinander bei derjenigen Montageausrichtung, bei welcher der vorher bestimmte Abstand des Gesamtmassenschwerpunktes des herzustellenden Rotors zu seiner Gesamtdrehachse (40) minimiert ist;
**dadurch gekennzeichnet, dass**
- das Erfassen des Rundlaufs der radial außen liegenden Mantelfläche (30) der Rotorelemente (20, 22, 24, 26) optisch mittels mindestens eines optischen Sensorelements (44) der Messeinrichtung (42) erfolgt,
- die durch die Messeinrichtung (42) erfassten Daten mittels der Auswerteinrichtung (46) mit einem dreidimensionalen Modell, insbesondere einem CAD-Modell, der jeweiligen Rotorelemente (20, 22, 24, 26) verknüpft werden und
- durch die Messeinrichtung (42) die Daten von einer Vielzahl von funktional gleichartigen Rotorelementen (20, 22, 24, 26) erfasst werden und mittels der Auswerteinrichtung dasjenige Rotorelement (20, 22, 24, 26) dieser Vielzahl von funktional gleichartigen Rotorelementen (20, 22, 24, 26) zum Verbinden mit wenigstens einem weiteren Rotorelement (20, 22, 24, 26) ausgewählt wird, bei dessen Auswahl der Abstand des Gesamtmassenschwerpunktes des herzustellenden Rotors von seiner Gesamtdrehachse (40) minimiert ist.

2. Verfahren nach Anspruch 1,
**dadurch gekennzeichnet, dass**
mittels des optischen Sensorelements (44) eine Exzentrizität einer gesamten jeweiligen Mantelfläche (30) der Rotorelemente (20, 22, 24, 26) erfasst wird, wobei mittels der Auswerteinrichtung (46) in Abhängigkeit von dieser erfassten Exzentrizität der gesamten jeweiligen Mantelfläche (30) der Abstand und die Winkellage des Massenschwerpunkts von der Drehachse (48) des jeweiligen Rotorelements (20, 22, 24, 26) bestimmt werden.

3. Verfahren nach einem der Ansprüche 1 oder 2,
**dadurch gekennzeichnet, dass**
mittels der Messeinrichtung (42) ein Rundlauf wenigstens zweier voneinander axial beabstandeter Lagerstellen (28) der jeweiligen Rotorelemente (20, 22, 24, 26) erfasst wird, wobei mittels der Auswerteinrichtung (46) in Abhängigkeit von diesen erfassten Rundläufen der voneinander axial beabstandeten Lagerstellen die Drehachse (48) der jeweiligen Rotorelemente (20, 22, 24, 26) bestimmt wird.

4. Verfahren nach einem der vorhergehenden Ansprüche,
**dadurch gekennzeichnet, dass**
mittels mindestens eines optischen Sensorelements (44) eine Exzentrizität einer gesamten Lagermantelfläche der jeweiligen Rotorelemente (20, 22, 24, 26) erfasst wird, wobei mittels der Auswerteinrichtung in Abhängigkeit von dieser erfassten Exzentrizität der gesamten Lagermantelfläche die Drehachse (48) der jeweiligen Rotorelemente (20, 22, 24, 26) bestimmt wird.

5. Verfahren nach einem der vorhergehenden Ansprüche,
**dadurch gekennzeichnet, dass**
für die jeweiligen Rotorelemente (20, 22, 24, 26) Korrekturfaktoren vorgegeben werden, wobei in Abhängigkeit von diesen Korrekturfaktoren der jeweilige Abstand eines Gesamtmassenschwerpunkts des aus den Rotorelementen (20, 22, 24, 26) aufgebauten Rotors zu seiner Gesamtdrehachse (40) bei verschiedenen relativen Montageausrichtungen der Rotorelemente (20, 22, 24, 26) zueinander mittels der Auswerteinrichtung (46) bestimmt wird.

6. Verfahren nach Anspruch 5,
**dadurch gekennzeichnet, dass**
für die jeweiligen Rotorelemente (20,22, 24, 26) einer der jeweiligen Korrekturfaktoren so vorgegeben wird, dass dieser Korrekturfaktor jeweils einer Masse des jeweiligen Rotorelements (20, 22, 24, 26) entspricht.

7. Verfahren nach Anspruch 6,
**dadurch gekennzeichnet, dass**
das dreidimensionale Modell der jeweiligen Rotorelemente (20, 22, 24, 26) Informationen zu deren jeweiliger Dichte beinhaltet, insbesondere eine Dichteverteilung, wobei in Abhängigkeit von diesen Informationen die relativen Montageausrichtungen der jeweiligen Rotorelemente (20, 22, 24, 26) zueinander, bei welcher der Abstand des Gesamtmassenschwerpunktes des herzustellenden Rotors zu seiner Gesamtdrehachse (40) minimiert ist, bestimmt wird.

8. Verfahren nach einem der vorhergehenden Ansprüche,
**dadurch gekennzeichnet, dass**
das in Abhängigkeit von durch die Messeinrichtung (42) erfassten Daten wenigstens eines der jeweiligen Rotorelemente (20, 22, 24, 26) nachbearbeitet wird.

9. Verfahren nach einem der vorhergehenden Ansprüche,
**dadurch gekennzeichnet, dass**
die verschiedenen relativen Montageausrichtung der Rotorelemente (20, 22, 24, 26) zueinander, bei welchen die jeweiligen Abstände des Gesamtmassenschwerpunkts des aus den Rotorelementen (20, 22, 24, 26) aufgebauten Rotors zu seiner Gesamtdrehachse (40) bestimmt werden, bei diskreten Verdrehwinkeln der Rotorelemente (20, 22, 24, 26) zueinander ausgewählt werden.

10. Verfahren nach einem der vorhergehenden Ansprüche,
**dadurch gekennzeichnet, dass**
der Abstand der Massenschwerpunkte der jeweiligen Rotorelemente (20, 22, 24, 26) zu deren jeweiliger Drehachse (48) und/oder der Abstand des Gesamtmassenschwerpunkts des Rotors zu einer Gesamtdrehachse (40) des herzustellenden Rotors mittels der Auswerteinrichtung (46) mit einem vorgebbaren Schwellenwert verglichen werden, welcher einer jeweiligen Toleranzvorgabe für das jeweilige Rotorelement (20, 22, 24, 26) und/oder den Rotor entsprechen.

11. Verfahren nach einem der vorhergehenden Ansprüche,
**dadurch gekennzeichnet, dass**
das Verfahren ein Verfahren zum Verbinden wenigstens zweier Rotorelemente (20, 22, 24, 26) wenigstens eines Rotors einer als Flugtriebwerk ausgebildeten Strömungsmaschine ist.

12. Montagevorrichtung mit einer Messvorrichtung zur Verwendung in einem Verfahren nach einem der vorhergehenden Ansprüche, wobei eine Messeinrichtung (42) der Messvorrichtung wenigstens ein optisches Sensorelement (44) umfasst, mittels welchem ein Rundlauf von radial außen liegenden Mantelflächen (30) wenigstens zweier Rotorelemente (20, 22, 24, 26) erfassbar ist, **gekennzeichnet durch** wenigstens eine Ausrichteinrichtung, mittels welcher die Rotorelemente (20, 22, 24, 26) automatisch so zueinander ausrichtbar sind, dass bei einem Verbinden der Rotorelemente (20, 22, 24, 26) miteinander der Abstand des Gesamtmassenschwerpunktes des herzustellenden Rotors zu seiner Gesamtdrehachse (40) minimiert ist, und durch eine Auswerteinrichtung zur Bestimmung eines jeweiligen Abstandes eines Gesamtmassenschwerpunkts des aus den Rotorelementen (20, 22, 24, 26) aufgebauten Rotors zu seiner Gesamtdrehachse (40) bei verschiedenen relativen Montageausrichtungen der Rotorelemente (20, 22, 24, 26) zueinander in Abhängigkeit von den vorher bestimmten Massenschwerpunkten der jeweiligen Rotorelemente (20, 24, 26, 28) und zur Auswahl dasjenige Rotorelement (20, 22, 24, 26) einer Vielzahl von funktional gleichartigen Rotorelementen (20, 22, 24, 26) zum Verbinden mit wenigsten einem weiteren Rotorelement (20, 22, 24, 26) ausgewählt wird, bei dessen Auswahl der Abstand des Gesamtmassenschwerpunktes des herzustellenden Rotors von seiner Gesamtdrehachse (40) minimiert ist.

## Claims

1. Method for connecting at least two rotor elements (20, 22, 24, 26) of at least one rotor of a turbomachine, comprising at least the following steps:
- detecting, by means of a measuring device (42), a concentricity of at least one radially outer lateral surface (30) of the rotor elements (20, 22, 24, 26) at at least two mutually axially spaced points;
- determining a distance and an angular position of a center of mass with respect to an axis of rotation (48) of the relevant rotor element (20, 22, 24, 26) on the basis of the relevant detected concentricity;
- determining, by means of an evaluation device (46), a relevant distance of an overall center of mass of the rotor made up of the rotor elements (20, 22, 24, 26) from its overall axis of rotation (40) when there are different relative mounting orientations of the rotor elements (20, 22, 24, 26) with respect to one another on the basis of the previously determined centers of mass of the respective rotor elements (20, 24, 26, 28);
- determining those of said different relative mounting orientations of the rotor elements (20, 24, 26, 28) with respect to one another for which the distance of the overall center of mass of the rotor from its overall axis of rotation (40) is minimized;
- interconnecting the rotor elements (20, 22, 24, 26) in the mounting orientation for which the previously determined distance of the overall center of mass of the rotor to be manufactured from its overall axis of rotation (40) is minimized;
**characterized in that**
- the concentricity of the radially outer lateral surface (30) of the rotor elements (20, 22, 24, 26) is detected optically by means of at least one optical sensor element (44) of the measuring device (42),
- the data detected by the measuring device (42) are linked by means of the evaluation device (46) to a three-dimensional model, in particular a CAD model, of the respective rotor elements (20, 22, 24, 26) and
- the measuring device (42) detects the data from a large number of functionally identical rotor elements (20, 22, 24, 26) and, by means of the evaluation device, the rotor element (20, 22, 24, 26) of said large number of functionally identical rotor elements (20, 22, 24, 26) for which, when selected, the distance of the overall center of mass of the rotor to be manufactured from its overall axis of rotation (40) is minimized is selected for connection to at least one further rotor element (20, 22, 24, 26).

2. Method according to claim 1, **characterized in that** an eccentricity of an overall relevant lateral surface (30) of the rotor elements (20, 22, 24, 26) is detected by means of the optical sensor element (44), the distance and the angular position of the center of mass from the axis of rotation (48) of the relevant rotor element (20, 22, 24, 26) being determined by means of the evaluation device (46) on the basis of said detected eccentricity of the overall relevant lateral surface (30).

3. Method according to either claim 1 or claim 2, **characterized in that** a concentricity of at least two mutually axially spaced bearing points (28) of the respective rotor elements (20, 22, 24, 26) is detected by means of the measuring device (42), the axis of rotation (48) of the respective rotor elements (20, 22, 24, 26) being determined by means of the evaluation device (46) on the basis of said detected concentricities of the mutually axially spaced bearing points.

4. Method according to any of the preceding claims, **characterized in that** an eccentricity of an overall bearing lateral surface of the respective rotor elements (20, 22, 24, 26) is detected by means of at least one optical sensor element (44), the axis of rotation (48) of the respective rotor elements (20, 22, 24, 26) being determined by means of the evaluation device on the basis of said detected eccentricity of the overall bearing lateral surface.

5. Method according to any of the preceding claims, **characterized in that** correction factors are predetermined for the respective rotor elements (20, 22, 24, 26), the relevant distance of an overall center of mass of the rotor made up of the rotor elements (20, 22, 24, 26) from its overall axis of rotation (40) when there are different relative mounting orientations of the rotor elements (20, 22, 24, 26) with respect to one another being determined by means of the evaluation device (46) on the basis of said correction factors.

6. Method according to claim 5, **characterized in that** one of the respective correction factors is predetermined for the respective rotor elements (20, 22, 24, 26) such that said correction factor in each case corresponds to a mass of the relevant rotor element (20, 22, 24, 26).

7. Method according to claim 6, **characterized in that** the three-dimensional model of the respective rotor elements (20, 22, 24, 26) contains information regarding the relevant density thereof, in particular a density distribution, the relative mounting orientations of the respective rotor elements (20, 22, 24, 26) with respect to one another for which the distance of the overall center of mass of the rotor to be manufactured from its overall axis of rotation (40) is minimized being determined on the basis of said information.

8. Method according to any of the preceding claims, **characterized in that** the at least one of the respective rotor elements (20, 22, 24, 26) is reworked on the basis of data detected by the measuring device (42).

9. Method according to any of the preceding claims, **characterized in that** the different relative mounting orientations of the rotor elements (20, 22, 24, 26) with respect to one other, for which the respective distances of the overall center of mass of the rotor made up of the rotor elements (20, 22, 24, 26) from its overall axis of rotation (40) are determined, are selected with discrete angles of rotation of the rotor elements (20, 22, 24, 26) with respect to one other.

10. Method according to any of the preceding claims, **characterized in that** the distance of the centers of mass of the respective rotor elements (20, 22, 24, 26) from the relevant axis of rotation (48) thereof and/or the distance of the overall center of mass of the rotor from an overall axis of rotation (40) of the rotor to be manufactured are compared by means of the evaluation device (46) with a predeterminable threshold value which corresponds to a relevant tolerance specification for the relevant rotor element (20, 22, 24, 26) and/or the rotor.

11. Method according to any of the preceding claims, **characterized in that** the method is a method for connecting at least two rotor elements (20, 22, 24, 26) of at least one rotor of a turbomachine designed as an aircraft engine.

12. Mounting apparatus comprising a measuring apparatus for use in a method according to any of the preceding claims, a measuring device (42) of the measuring apparatus comprising at least one optical sensor element (44) by means of which a concentricity of radially outer lateral surfaces (30) of at least two rotor elements (20, 22, 24, 26) can be detected, **characterized by** at least one alignment device by means of which the rotor elements (20, 22, 24, 26) can be automatically aligned with one another such that, when the rotor elements (20, 22, 24, 26) are interconnected, the distance of the overall center of mass of the rotor to be manufactured from its overall axis of rotation (40) is minimized, and by an evaluation device for determining, on the basis of the previously determined centers of mass of the respective rotor elements (20, 24, 26, 28), a relevant distance of an overall center of mass of the rotor made up of the rotor elements (20, 22, 24, 26) from its overall axis of rotation (40) when there are different relative mounting orientations of the rotor elements (20, 22, 24, 26) with respect to one another and, for selection, the rotor element (20, 22, 24, 26) of a large number of functionally identical rotor elements (20, 22, 24, 26) for which, when selected, the distance of the overall center of mass of the rotor to be manufactured from its overall axis of rotation (40) is minimized is selected for connection to at least one further rotor element (20, 22, 24, 26).

## Revendications

1. Procédé de liaison d'au moins deux éléments de rotor (20, 22, 24, 26) d'au moins un rotor d'une turbomachine, comprenant au moins les étapes suivantes :
- détection d'une concentricité d'au moins une surface d'enveloppe radialement extérieure (30) des éléments de rotor (20, 22, 24, 26) à au moins deux emplacements espacés axialement l'un de l'autre au moyen d'un moyen de mesure (42) ;
- détermination d'une distance et d'une position angulaire d'un centre de gravité par rapport à un axe de rotation (48) de l'élément de rotor (20, 22, 24, 26) respectif en fonction de la concentricité détectée respective ;
- détermination d'une distance respective d'un centre de gravité total du rotor constitué par les éléments de rotor (20, 22, 24, 26) par rapport à son axe de rotation total (40) dans différentes orientations de montage relatives des éléments de rotor (20, 22, 24, 26) les uns par rapport aux autres en fonction des centres de gravité précédemment déterminés des éléments de rotor (20, 24, 26, 28) respectifs au moyen d'un dispositif d'évaluation (46) ;
- détermination de celles parmi ces différentes orientations de montage relatives des éléments de rotor (20, 24, 26, 28) les unes par rapport aux autres, dans lesquelles la distance du centre de gravité total du rotor par rapport à son axe de rotation total (40) est réduite ;
- liaison des éléments de rotor (20, 22, 24, 26) les uns aux autres dans l'orientation de montage dans laquelle la distance prédéfinie du centre de gravité total du rotor à fabriquer par rapport à son axe de rotation total (40) est réduite ;
**caractérisé en ce que**
- la concentricité de la surface d'enveloppe (30) radialement extérieure des éléments de rotor (20, 22, 24, 26) est détectée de manière optique au moyen d'au moins un élément capteur optique (44) du moyen de mesure (42), **en ce que**
- les données détectées par le moyen de mesure (42) sont liées, au moyen du dispositif d'évaluation (46), à un modèle tridimensionnel, en particulier un modèle CAD des éléments de rotor (20, 22, 24, 26) respectifs, et **en ce que**
- le moyen de mesure (42) détecte les données d'une pluralité d'éléments de rotor (20, 22, 24, 26) fonctionnellement identiques, et **en ce que**, au moyen du dispositif d'évaluation, l'élément de rotor (20, 22, 24, 26) de ladite pluralité d'éléments de rotor (20, 22, 24, 26) fonctionnellement identiques, dont la sélection réduit la distance du centre de gravité total du rotor à fabriquer par rapport à son axe de rotation total (40), est sélectionné pour être relié à au moins un autre élément de rotor (20, 22, 24, 26).

2. Procédé selon la revendication 1, **caractérisé en ce qu'**une excentricité de l'ensemble d'une surface d'enveloppe (30) respective des éléments de rotor (20, 22, 24, 26) est détectée au moyen de l'élément capteur optique (44), dans lequel la distance et la position angulaire du centre de gravité par rapport à l'axe de rotation (48) de l'élément de rotor (20, 22, 24, 26) respectif sont déterminées au moyen du dispositif d'évaluation (46) en fonction de ladite excentricité détectée de l'ensemble de la surface d'enveloppe (30) respective.

3. Procédé selon l'une des revendications 1 ou 2, **caractérisé en ce qu'**une concentricité d'au moins deux points d'appui (28) axialement espacés des éléments de rotor (20,22,24,26) respectifs est détectée au moyen du moyen de mesure (42), dans lequel l'axe de rotation (48) des éléments de rotor (20, 22, 24, 26) respectifs est déterminé au moyen du dispositif d'évaluation (46) en fonction desdites concentricités des points d'appui axialement espacés.

4. Procédé selon l'une des revendications précédentes, **caractérisé en ce que**, au moyen d'au moins un élément capteur optique (44), une excentricité de l'ensemble d'une surface d'enveloppe d'appui des éléments de rotor (20, 22, 24, 26) respectifs est détectée, dans lequel l'axe de rotation (48) des éléments de rotor (20, 22, 24, 26) respectifs est déterminé au moyen du dispositif d'évaluation en fonction de ladite excentricité détectée de l'ensemble de la surface d'enveloppe d'appui.

5. Procédé selon l'une des revendications précédentes, **caractérisé en ce que** des facteurs de correction sont prédéfinis pour les éléments de rotor (20, 22, 24, 26) respectifs, dans lequel la distance respective d'un centre de gravité total du rotor constitué par les éléments de rotor (20, 22, 24, 26) par rapport à son axe de rotation total (40) dans différentes orientations de montage relatives des éléments de rotor (20, 22, 24, 26) les uns par rapport aux autres est déterminée au moyen du dispositif d'évaluation (46) en fonction desdits facteurs de correction.

6. Procédé selon la revendication 5, **caractérisé en ce que** l'un des facteurs de correction respectifs est prédéfini pour les éléments de rotor (20, 22, 24, 26) respectifs de telle manière que ledit facteur de correction corresponde respectivement à une masse de l'élément de rotor (20, 22, 24, 26) respectif.

7. Procédé selon la revendication 6, **caractérisé en ce que** le modèle tridimensionnel des éléments de rotor (20, 22, 24, 26) respectifs renferme des informations sur leur densité respective, en particulier une répartition de densité, dans lequel, en fonction desdites informations, l'on détermine les orientations de montage relatives des éléments de rotor (20, 22, 24, 26) respectifs les unes par rapport aux autres, orientations dans lesquelles la distance du centre de gravité total du rotor à fabriquer par rapport à son axe de rotation total (40) est réduite.

8. Procédé selon l'une des revendications précédentes, **caractérisé en ce que** l'au moins un des éléments de rotor (20, 22, 24, 26) respectifs est retravaillé en fonction des données détectées par le moyen de mesure (42).

9. Procédé selon l'une des revendications précédentes, **caractérisé en ce que** les différentes orientations de montage relatives des éléments de rotor (20, 22, 24, 26) les uns par rapport aux autres, orientations dans lesquelles les distances respectives du centre de gravité total du rotor constitué par les éléments de rotor (20, 22, 24, 26) par rapport à son axe de rotation total (40) sont déterminées, sont choisies les unes par rapport aux autres selon des angles de torsion discrets des éléments de rotor (20, 22, 24, 26).

10. Procédé selon l'une des revendications précédentes, **caractérisé en ce que** la distance entre le centre de gravité des éléments de rotor (20, 22, 24, 26) respectifs par rapport à leur axe de rotation (48) respectif et/ou la distance du centre de gravité total du rotor par rapport à un axe de rotation total (40) du rotor à fabriquer sont comparées au moyen du dispositif d'évaluation (46) à une valeur de seuil prédéfinissable, laquelle valeur de seuil correspond à une spécification de tolérance respective pour l'élément de rotor (20, 22, 24, 26) respectif et/ou le rotor.

11. Procédé selon l'une des revendications précédentes, **caractérisé en ce que** le procédé est un procédé de liaison d'au moins deux éléments de rotor (20, 22, 24, 26) d'au moins un rotor d'une turbomachine réalisée sous la forme d'un moteur d'aéronef.

12. Dispositif de montage comprenant un dispositif de mesure destiné à être utilisé dans un procédé selon l'une des revendications précédentes, dans lequel un moyen de mesure (42) du dispositif de mesure comprend au moins un élément capteur optique (44), au moyen duquel une concentricité de surfaces d'enveloppe (30) radialement extérieures d'au moins deux éléments de rotor (20, 22, 24, 26) peut être détectée, **caractérisé par** au moins un dispositif d'alignement, au moyen duquel les éléments de rotor (20, 22, 24, 26) peuvent être automatiquement alignés les uns avec les autres de telle manière que, lorsque les éléments de rotor (20, 22, 24, 26) sont reliés, la distance du centre de gravité total du rotor à fabriquer par rapport à son axe de rotation total (40) est réduite, et, au par un dispositif d'évaluation permettant de déterminer une distance respective d'un centre de gravité total du rotor constitué par les éléments de rotor (20, 22, 24, 26) par rapport à son axe de rotation total (40) dans différentes orientations de montage relatives des éléments de rotor (20, 22, 24, 26) les uns par rapport aux autres en fonction du centre de gravité précédemment déterminé des éléments de rotor (20, 24, 26, 28) respectifs, et de sélectionner, l'élément de rotor (20, 22, 24, 26) d'une pluralité d'éléments de rotor (20, 22, 24, 26) fonctionnellement identiques, élément de rotor dont la sélection réduit la distance du centre de gravité total du rotor à fabriquer par rapport à son axe de rotation total (40), ledit élément de rotor étant sélectionné pour être relié à au moins un autre élément de rotor (20, 22, 24, 26).
